# EUROPÄISCHE PATENTSCHRIFT

(11) **EP 1 925 521 B1**
(45) Veröffentlichungstag und Bekanntmachung des Hinweises auf die Patenterteilung: **19.09.2012**
(21) Anmeldenummer: 07020741.0
(22) Anmeldetag: 24.10.2007
(51) Int. Cl.: B60W 20/00, B60K 6/48, B60K 6/547, B60W 10/02, B60W 10/06, B60W 10/08, B60W 10/10

(54) **Verfahren und Vorrichtung zum Zuschalten eines Verbrennungsmotors in einem Hybrid-Fahrzeugantrieb**
Method and device for coupling a combustion engine in a hybrid drive train
Procédé et dispositif pour accoupler d'un moteur à combustion interne dans une propulsion d'un véhicule hybride

(30) Priorität: 21.11.2006 DE 102006054740
(43) Veröffentlichungstag der Anmeldung: 28.05.2008
(73) Patentinhaber: Dr. Ing. h.c. F. Porsche AG, 70435 Stuttgart (DE)
(72) Erfinder: Sauvlet, Nils, 70839 Gerlingen (DE); Fleckner, Marco, 71229 Leonberg (DE); Göhring, Markus, 71154 Nufringen (DE); Kraxner, Dieter, 75449 Wurmberg (DE)

(56) Entgegenhaltungen:
- WO-A2-2005/100777
- DE-U1-202005 019 996
- US-A- 5 818 116
- US-A1- 2003 089 538

## Beschreibung

### STAND DER TECHNIK

Die vorliegende Erfindung betrifft ein Verfahren und eine Vorrichtung zum Zuschalten eines Verbrennungsmotors bei einem Hybrid-Fahrzeugantrieb.

Seit einigen Jahren sind als verbrauchssparende und umweltschonendere Alternativen zu üblichen Brennkraftmaschinen Fahrzeuge mit so genannten Hybridantrieben bekannt. Als Hybridantrieb bezeichnet man in der Regel die Kombination verschiedener Antriebsprinzipien oder die Kombination verschiedener Energiequellen für eine jeweilige Antriebsform. Allgemein weist ein Hybridantrieb demnach zwei verschiedene Energiewandler und zwei verschiedene Energiespeicher auf. Bis auf wenige Ausnahmen handelt es sich dabei in der praktischen Umsetzung bei den Energiewandlern um einen Verbrennungsmotor und einen Elektromotor und bei den Energiespeichern um einen brennbaren Kraftstoff und eine Batterie.

Bei einem Fahrzeug mit Hybridantrieb können sowohl der Verbrennungsmotor wie auch der Elektromotor in einem jeweils günstigen Wirkungsgradbereich betrieben werden. Überschüssige Energie, beispielsweise beim Bremsen oder passiven Rollen, wird über einen Generator für die Batterieaufladung verwendet.

Beim Beschleunigen arbeiten Verbrennungs- und Elektromotor in der Regel gemeinsam, sodass im Vergleich zu einem üblichen Verbrennungsmotor ein Kleinerer verwendet werden kann. Da ein Verbrennungsmotor insbesondere in einem höheren Drehzahlbereich ein hohes Drehmoment liefern kann, eignet sich insbesondere beim Anfahren eher der vorgehaltene Elektromotor, da dieser auch bei niedrigen Drehzahlen ein maximales Drehmoment zur Verfügung stellen kann. Bei bestimmten Fahrdynamiken erfolgt somit ein jeweiliges Zu- und Abschalten der beiden Motoren, um ein verbrauchsgünstigstes Fahren mit hohem Wirkungsgrad zu erzielen.

Insbesondere beim Anfahren oder beispielsweise Beschleunigen nach dem langsamen Durchfahren einer engen Kurve eignet sich eher der Elektromotor zur Beschleunigung, wohingegen bei einer anschließenden Beschleunigung auf mittlere bis hohe Geschwindigkeiten der Verbrennungsmotor einen guten Wirkungsgrad aufweist. Abhängig von den jeweiligen Fahrtsituationen wird daher der Verbrennungsmotor gestartet und z. B. über eine Kupplung an den Elektromotor gekoppelt, welcher im Antriebsstrang des Fahrzeugs vorgesehen ist.

Beispielsweise beim Bremsen oder Rollen agiert der Elektromotor als Generator und lädt die Batterie in einer entsprechenden Rekuperationsphase auf. In der Regel werden Hybridfahrzeuge mit einem Automatikgetriebe ausgestattet, das zum Erzielen eines jeweiligen bestmöglichen Wirkungsgrads für die Umsetzung potenzieller elektrischer oder chemischer Energie in kinetische Energie von einer Steuerung gesteuert wird.

Bei einem Zuschalten des Verbrennungsmotors wird der Elektromotor als Anlasser verwendet und nach einem kurzen Bewegen des Verbrennungsmotors die Zündung gestartet. Dann muss eine Regelung der beiden Motoren auf eine gemeinsame Drehzahl erfolgen. Häufig werden die beim Zuschalten der einzelnen Antriebsmöglichkeiten entstehenden Geräusche als störend vom Fahrer empfunden.

Aus der DE 20 2005 019 996 U1, das als nächstliegender stand der Technik angeschen wird, ist eine Steuerungsvorrichtung bekannt zur Steuerung des Starts eines Verbrennungsmotors in einem Fahrzeug mit einer elektrischen Maschine, einer ersten, zwischen dem Verbrennungsmotor und der elektrischen Maschine angebrachten Kupplung, mittels derer der Verbrennungsmotor wahlweise mit der elektrischen Maschine verbunden werden kann, und einer zweiten, zwischen der elektrischen Maschine und Fahrzeugantriebsrädern angeordneten Kupplung, wobei die zweite Kupplung wahlweise eingerückt werden kann, um die Übertragung von Drehmoment zwischen der elektrischen Maschine und den Fahrzeugantriebsrädern zu fördern, wobei die Steuerungsvorrichtung dahingehend ausgebildet ist, einen Start des Verbrennungsmotors anzufordern, die elektrische Maschine zu betreiben, die zweite Kupplung teilweise außer Eingriff zu bringen, wenn die zweite Kupplung bei der Anforderung des Starts des Verbrennungsmotors vollständig eingerückt ist, wobei der nur teilweise Eingriff der zweiten Kupplung einen Schlupf in dieser verursacht, wodurch die Fahrzeugantriebsräder wenigstens teilweise von Drehmomentungleichmäßigkeiten des Verbrennungsmotors isoliert werden, die erste Kupplung einzurücken, wodurch der Verbrennungsmotor mit der elektrischen Maschine verbunden wird, und dem Verbrennungsmotor Kraftstoff zuzuführen, wodurch die Erzeugung von Drehmoment durch den Verbrennungsmotor gefördert wird.

Es ist eine Aufgabe der vorliegenden Erfindung, ein verbessertes Verfahren beim Zuschalten eines Verbrennungsmotors bei einem Hybrid-Fahrzeugantrieb zu schaffen.

### VORTEILE DER ERFINDUNG

Das erfindungsgemäße Verfahren zum Zuschalten eines Verbrennungsmotors bei einem Hybrid-Fahrzeugantrieb gemäß Anspruch 1 bzw. die entsprechende Vorrichtung gemäß Anspruch 8 weist den Vorteil auf, dass durch kurzzeitiges Überschreiten der Zieldrehzahl für den Verbrennungsmotor ein charakteristisches, häufig von bekannten Fahrzeugen vertrautes, Geräusch auftritt. Dies führt zu einem erhöhten Fahrkomfort.

Gemäß der Erfindung wird ein entsprechender Drehzahlüberschwinger über die Zieldrehzahl hinaus, welche die aktuelle Drehzahl des Elektromotors ist, erzeugt. Durch Vorgeben der entsprechenden Drehzahldifferenz und der Länge des Überschwingers durch einen vorgegebenen Zeitraum kann die akustische Wirkung beim Zuschalten des Verbrennungsmotors präzise eingestellt werden. Die sich ergebende entsprechende Klangcharakteristik wird derart gewählt, dass sie an einen sportlichen Motorstart erinnert.

Erfindungsgemäß wird die Drehzahl des Verbrennungsmotors nach Erreichen einer maximalen Drehzahl, welche der Summe aus der Zieldrehzahl und der Drehzahldifferenz entspricht, auf die Zieldrehzahl, d.h. die aktuellen Drehzahl des Elektromotors, abgeregelt. Dabei erfolgt das Überschreiten der Zieldrehzahl in Abhängigkeit von einem Wahlschalter. Es ist somit möglich, dass der Fahrer an seine Bedürfnisse angepasst einen Drehzahlüberschwinger beim Zuschalten des Verbrennungsmotors verhindert.

In einer Variante des Verfahrens werden die folgenden Verfahrensschritte durchgeführt:
- Überwachen von mindestens einem Zuschaltkriterium für das Zuschalten des Verbrennungsmotors;
- Kuppeln des Verbrennungsmotors mit dem Elektromotor;
- Zünden des Verbrennungsmotors; und
- Regeln der Drehzahl des Verbrennungsmotors derart, dass die Drehzahl über einen vorgegebene Zeitraum und um eine vorgegebene Drehzahldifferenz die Zieldrehzahl zum Erzeugen des Drehzahlüberschwingers überschreitet.

Zuschaltkriterien zum Einschalten und Ankoppeln des Verbrennungsmotors an den Antriebsstrang eines entsprechenden Fahrzeugs sind beispielsweise typische Fahrzeugdynamiken wie eine Beschleunigungsfahrt bei mittlerer oder hoher Geschwindigkeit, lange Fahrten bei mittlerer oder hoher Geschwindigkeit in der der Verbrennungsmotor einen besseren Wirkungsgrad als der Elektromotor aufweist, oder z. B. ein kritischer Ladezustand der Batterie für den Elektromotor. Das Kuppeln des Verbrennungsmotors mit dem Elektromotor erfolgt beispielsweise mittels einer steuerbaren mechanischen Kupplung.

In einer bevorzugten Variante des erfindungsgemäßen Verfahrens werden der Verbrennungsmotor und der Elektromotor in einer Zuschaltphase mittels einer, beispielsweise mechanischen, Kupplungseinrichtung miteinander gekoppelt, wobei die Kupplungsstärke zum Erzeugen des Drehzahlüberschwingers vor Erreichen der Zieldrehzahl vorübergehend erniedrigt wird. Dadurch wird ermöglicht, dass der Verbrennungsmotor vorübergehend eine höhere Drehzahl aufweisen kann als der Elektromotor.

Die Drehzahldifferenz liegt vorzugsweise zwischen 200 und 500 Umdrehungen pro Minute und der vorgegebene Zeitraum beispielsweise zwischen 0,5 und 1 Sekunde. Vorzugsweise wird während des Zuschaltens des Verbrennungsmotors ein Gangwechsel eines Getriebes des Hybridfahrzeugs unterdrückt.

Die Vorrichtung zur Zuschaltung eines Verbrennungsmotors zu einem durch einen Elektromotor angetriebenen Hybrid-Fahrzeugantrieb weist auf:
- einen Drehmomentwandler zur Kopplung des Fahrzeugantriebs mit einem Getriebe des Hybridfahrzeugs,
- eine Kupplungseinrichtung zur Kopplung des Elektromotors mit dem Verbrennungsmotor,
- eine Motorsteuerungseinrichtung, welche ein entsprechendes Verfahren zum Zuschalten des Verbrennungsmotors bei dem Hybrid-Fahrzeugantrieb durchführt, und
- einen Wahlschalter, zum Unterdrücken des Drehzahlüberschwingers.

Weitere vorteilhafte Ausgestaltungen der Erfindung sind Gegenstand der Unteransprüche und der im Folgenden beschriebenen Ausführungsbeispiele.

### ZEICHNUNGEN

Im Folgenden werden bevorzugte Ausführungsformen der Erfindung unter Bezugnahme auf die folgenden Figuren näher erläutert.

Es zeigen:
- Figur 1: ein Blockdiagramm eines Hybrid-Fahrzeugantriebs mit einer erfindungsgemäßen Vorrichtung zum Zuschalten des Verbrennungsmotors;
- Figur 2:: Drehzahl und Drehmoment-Diagramme für die während des erfindungsgemäßen Verfahrens auftretenden Größen; und
- Figur 3:: Drehzahl und Drehmoment-Diagramme für die in einer Variante des erfindungsgemäßen Verfahrens auftretenden Größen.

### BESCHREIBUNG DER AUSFÜHRUNGSBEISPIELE

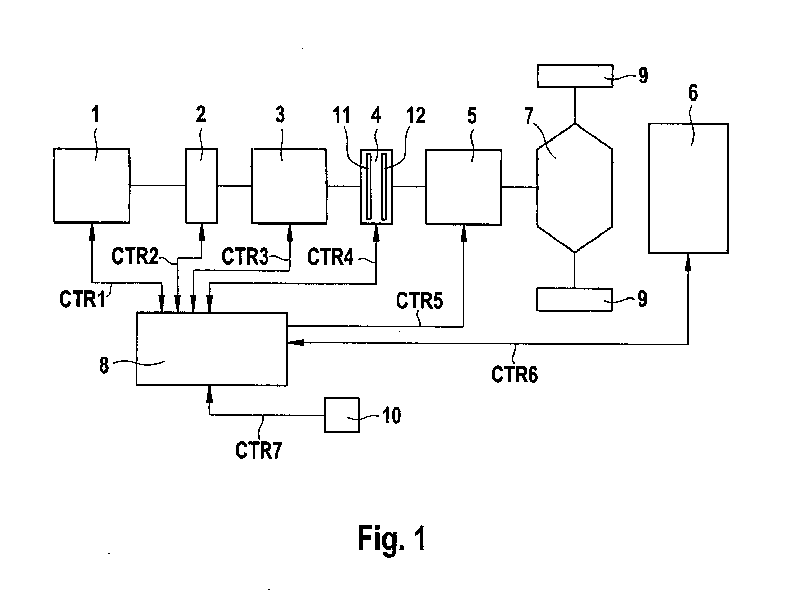

Die Figur 1 zeigt schematisch Elemente eines Fahrzeugs mit einem Parallelhybridantrieb. Der Antriebsstrang setzt sich aus einem Verbrennungsmotor 1, einem Elektromotor 3, welcher auch als Elektromaschine bezeichnet ist, einem Automatikgetriebe 5 und den über eine geeignete Gelenkwelle 7 angetriebenen Räder 9 zusammen. Dabei ist eine mechanische Trennkupplung 2 zwischen dem Verbrennungsmotor 1 und dem Elektromotor 3 vorgesehen sowie ein Drehmomentwandler 4 zwischen dem Elektromotor 3 und dem Automatikgetriebe 5. Als Energiespeicher für den Elektromotor 5 ist eine Batterie 6 vorgesehen.

Ferner verfügt der Hybridantrieb über eine Motorsteuerungseinrichtung 8, welche von den dargestellten Elementen Mess- und/oder Steuersignale CTR1-CTR6 erhält bzw. Steuersignale für den Verbrennungsmotor 1, die Trennkupplung 2, den Elektromotor 3, den Drehmomentwandler 4, das Automatikgetriebe 5 und die Batterie 6 erzeugt. Die Motorsteuerung kann ferner Steuersignale CTR7 von einem Auswahlschalter 10 erhalten, wodurch die Zuschaltcharakteristik des Verbrennungsmotors 1 zu dem Antrieb durch den Elektromotor 3 bestimmt wird.

Bei vollständigem Elektroantrieb des entsprechenden Fahrzeugs ist beispielsweise die Trennkupplung 2 zwischen dem Elektromotor 3 und dem Verbrennungsmotor 1 geöffnet, sodass ein Antrieb der Räder 9 nur über den Elektromotor 3 über den Drehmomentwandler 4 und das Automatikgetriebe 5 erfolgt. Der Drehmomentwandler 4 ist beispielsweise als hydrodynamischer Drehmomentwandler mit einem Pumpenrad 11, welches elektromotorseitig angetrieben wird, und einem Turbinenrad 12, welches z. B. mittels einer Welle an das Automatikgetriebe 5 gekoppelt ist, ausgeführt. Bei einem derartigen Drehmomentwandler wird die mechanische Energie des Motors durch das Pumpenrad 11 in Strömungsenergie innerhalb des Drehmomentwandlers umgewandelt und dann wiederum durch Umlenkung des Turbinenrades 12 in mechanische Energie umgesetzt. In der Figur 1 ist ein Pumpenrad lediglich schematisch dargestellt und mit dem Bezugszeichen 11 versehen, sowie das Turbinenrad mit dem Bezugszeichen 12.

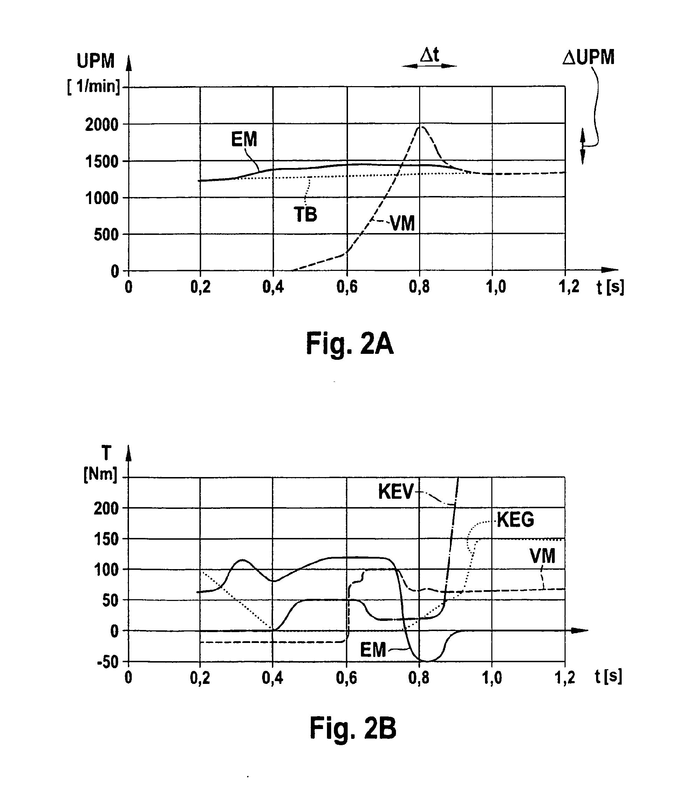

Die Motorsteuerungseinrichtung 8 führt zum Zuschalten des Verbrennungsmotors 1 zum Elektromotor 3 während des Fahrbetriebs ein erfindungsgemäßes Verfahren durch, das insbesondere anhand der Figur 2 näher erläutert wird.

In der Figur 2 sind Drehzahlen (UPM) und Drehmomente (T) in zeitlicher Abhängigkeit aufgetragen dargestellt. Insgesamt ist jeweils ein Zeitbereich t über etwa 1,2 Sekunden dargestellt, währenddessen eine Zuschaltung des Verbrennungsmotors 1 zu dem laufenden Elektromotor 3 erfolgt. In der Figur 2A beschreibt die durchgezogene Kurve EM die Drehzahl des Elektromotors 3, die gepunktete Kurve TB die Drehzahl des Turbinenrades 12 in dem Drehmomentwandler 4 und die gestrichelte Kurve VM die Drehzahl des Verbrennungsmotors 1. In der Figur 2B bezeichnet die durchgezogene Kurve EM das Drehmoment des Elektromotors 3, die gepunktete Kurve KEG das Drehmoment der Kopplung zwischen dem Elektromotor 3 und dem Getriebe 5, und die gestrichpunktete Linie KEV das Drehmoment der Kupplung 2 zwischen dem Verbrennungsmotor 1 und dem Elektromotor 3.

Während des Verfahrens prüft die Motorsteuerung 8 mehrere Zuschaltkriterien für das Zuschalten des Verbrennungsmotors 1, wie z. B. den Ladezustand der Batterie 6, die aktuelle Drehzahl, Drehmomentgrenzen der im Betrieb befindlichen Elektromaschine bzw. des Elektromotors 3 oder weitere die Fahrdynamik bestimmende Größen. Die Motorsteuerung 8 entscheidet anhand bekannter Algorithmen, dass der Verbrennungsmotor 1 zugeschaltet werden muss.

Während des Zuschaltens des Verbrennungsmotors 1 wird zunächst eine Gangänderung durch das Getriebe 5 unterdrückt. Der vorliegende eingelegte Gang wird damit fixiert. Dies erfolgt beispielsweise zwischen den Zeiten t = 0,25 s bis mindestens t = 0,85 s.

Zum Zeitpunkt t = 0,25 wird festgestellt, dass der Verbrennungsmotor zugeschaltet werden muss, da dies durch die vorliegende Fahrdynamik gefordert ist.

Zunächst wird eine Reduktion des in dem Drehmomentwandler 4 vorliegenden Öldrucks vorgenommen, wodurch eine Drehzahldifferenz zwischen dem Pumpenrad 11 bzw. der Drehzahl EM des Elektromotors 3 und der Drehzahl TB des Turbinenrads 12 ermöglicht. Dies geschieht zwischen t = 0,25 s bis t = 0,3 s ein. Anschließend wird zwischen t = 0,3 s und t = 0,75 s der Druck konstant gehalten, sodass sich die Drehzahl EM von dem Pumpenrad oder dem Elektromotor und von der Drehzahl TB des Turbinenrads 12 gering unterscheidet. Es sind auch weitere Einstellmittel für den Drehmomentwandler 4 denkbar, wie z. B. einer veränderbare Stellung eines Leitrades in dem Drehmomentwandler 4.

Bis zum Zeitpunkt t = 0,4 s erfährt die Kupplung 2 zwischen Elektromotor 3 und Verbrennungsmotor 1 kein Drehmoment, wie aus der Figur 2B hervorgeht.

Ab etwa 0,45 s steigt die Kopplungsstärke KEG der Kupplungseinrichtung 2 auf 50 Nm an, was sich in einem Anstieg der Drehzahl VM des Verbrennungsmotors 3 bemerkbar macht.

In der Phase zwischen 0,45 s and 0,6 s agiert der Elektromotor 3 als Anlasser für den Verbrennungsmotor 1. Dadurch ergibt sich auch das ansteigende Drehmoment EM des Elektromotors 3 während dieses Zeitabschnitts.

Zum Zeitpunkt 0,6 s zündet die Motorsteuerung 8 den Verbrennungsmotor 1, sodass dieser anläuft. Relativ rasch steigt daher die Drehzahl VM zwischen 0,6 s und 0,75 s an. Als Zieldrehzahl ist üblicherweise die Drehzahl EM des Elektromotors 3, also etwa 1.490 Umdrehungen pro Minute, vorgegeben.

Erfindungsgemäß wird durch die Motorsteuerung 8 ein Drehzahlüberschwinger, also ein kurzzeitiges Überschreiten dieser Zieldrehzahl durch die Verbrennungsmotordrehzahl VM erzielt, um dem Fahrer ein besonders angenehmes Fahrgefühl zu vermitteln. Dazu wird die Kupplungsstärke KEV der Kupplung 2 zwischen Elektromotor 3 und Verbrennungsmotor 1 ab dem Zeitpunkt t = 0,65 s herabgesetzt bis etwa t = 0,85 s. In diesem Zeitraum regelt die Motorsteuerung 8 die Drehzahl VM des Verbrennungsmotors um eine vorgegebene Drehzahldifferenz △UPM über die Zieldrehzahl von etwa 1.490 Umdrehungen pro Minute hinaus. Nach Erreichen dieser maximalen Drehzahl, die sich aus der Summe der Zieldrehzahl des Elektromotors mit der Drehzahldifferenz △UPM ergibt, regelt die Motorsteuerung 8 die Drehzahl VM des Verbrennungsmotors 1 auf die Zieldrehzahl EM des Elektromotors 3 zurück. Als Drehzahlüberschwinger ergibt sich, wie in der Figur 2A dargestellt ist, ein Bereich zwischen den sich schneidenden Kurven für die Drehzahl EM des Elektromotors 3 mit der Drehzahl VM des Verbrennungsmotors 1.

Nach dem "Zurückschwingen" bzw. Erreichen der Zieldrehzahl EM nach dem Drehzahlüberschwinger wird die Kupplungsstärke KEG der zwischen Verbrennungsmotor 1 und Elektromotor 3 vorgesehenen Kupplungseinrichtung 2 erhöht, um den Fahrbetrieb des Hybridfahrzeugs mit beiden Antrieben gleichzeitig (Verbrennungsmotor und E-Maschine) weiterzuführen.

Es ist auch denkbar, dass der Elektromotor 3 ab dem Regeln des Verbrennungsmotors 1 auf die Zieldrehzahl EM des Elektromotors 3 kein weiteres Drehmoment EM mehr erzeugt, wie dies in der Figur 2B ab etwa t = 0,9 s angedeutet ist. Dann sorgt nunmehr der Verbrennungsmotor 1 für ein in etwa gleichmäßiges Drehmoment VM, das in dem hier betrachteten Beispiel bei etwa 70 Nm liegt.

Die erfindungsgemäße Regelung der Verbrennungsmotordrehzahl für einen kurzen Zeitraum oberhalb der Drehzahl des Elektromotors 3 führt beim Fahrer zur Wahrnehmung eines sportlichen Aufheulens des Motors. Dies ist insbesondere bei besonders sportlichen Fahrzeugen von Vorteil und vermittelt dem Fahrer ein vertrautes Gefühl mit dem Fahrzeug auch im tendenziell unsportlichen Hybridbetrieb des Fahrzeugs. Das konkrete Geräusch des Drehzahlüberschwingers lässt sich durch Anpassen des Zeitraums △t sowie der Drehzahldifferenz △UPM jeweils modellieren. Auch die Geräuschform kann beispielsweise der Motorsteuerung 8 einprogrammiert werden, sodass immer ein für den Fahrer besonders angenehmes Motorgeräusch und Fahrgeräusch entsteht.

Als Auslösekriterium für den Drehzahlüberschwinger kann z. B. die Drehmomentabgabe des Verbrennungsmotors 1 verwendet werden, die sich aus der Kurve VM ergibt. Ab einem bestimmten Drehmoment wird dann die Kopplungsstärke 2 zwischen dem Elektromotor 3 und dem Verbrennungsmotor 1 herabgesetzt, sodass die Drehzahl VM des Verbrennungsmotors über die des Elektromotors 3 hinausschießen kann. Als weitere Auslösekriterien für den Drehzahlüberschwinger kommt eine Zeitsteuerung in Frage, wie beispielsweise ein bestimmter Zeitbereich nach der Zündung des Verbrennungsmotors oder eine Überwachung der Drehzahl des Verbrennungs- und des Elektromotors. Eine entsprechende Motorsteuerung 8 lässt sich dann derart programmieren, dass sich ein Drehzahlüberschwinger ergibt.

Die erfindungsgemäße Vorrichtung erlaubt ferner durch Verändern der Schalterstellung 10, den jeweiligen Drehzahlüberschwinger zu unterdrücken. Es ist beispielsweise denkbar, dass nur bei Betätigen der auch als Sporttaste bezeichneten Wahlschalters 10 ein sportliches Zuschalten und Startverhalten des Verbrennungsmotors im Elektrobetrieb erfolgt.

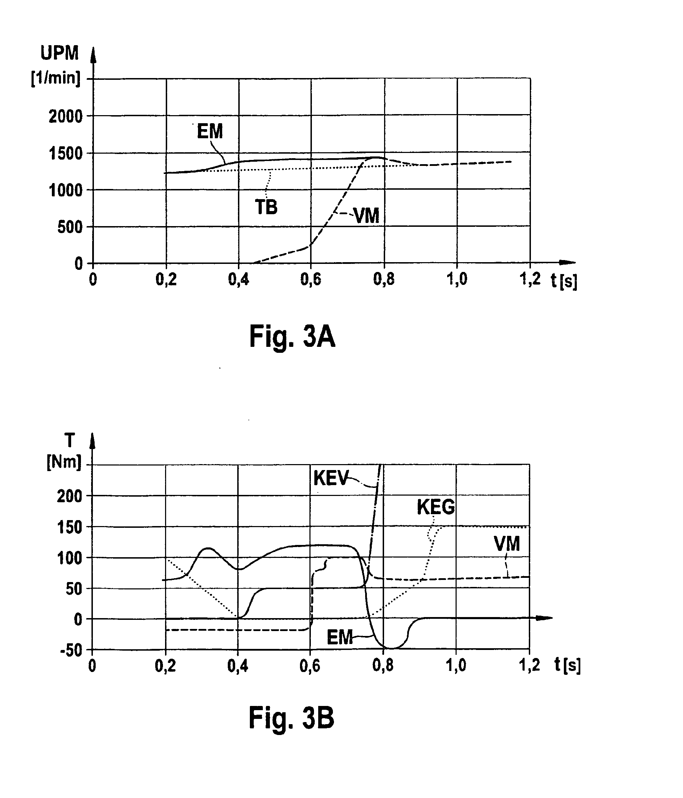

In der Figur 3 sind Drehzahlen VPM und Drehmomente T zeitabhängig dargestellt für den Fall, dass eine sanfte Zuschaltung des Verbrennungsmotors 1 ohne Drehzahlüberschwinger geschieht. Dabei sind dieselben Bezeichnungen wie in den Figuren 2A und 2B verwendet.

Insbesondere in der Figur 3A ist zu erkennen, dass die Drehzahl VM des Verbrennungsmotors 1 im Zeitraum 0,6 s bis 0,8 s ansteigt und derart geregelt oder gesteuert wird, dass sie nur die Drehzahl EM des Elektromotors 3 erreicht, ohne darüber hinauszuschießen. In der Figur 3B ergibt sich dies aus dem Verlauf der Kurve für die Kupplungsstärke KEV der Kupplung 2 zwischen dem Elektromotor 3 und der Verbrennungsmaschine 1. Im Zeitbereich zwischen etwa 0,45 s und 0,75 s ist das Drehmoment KEV auf diese Kupplungseinrichtung konstant, bis bei etwa 0,75 s die Drehzahl VM des Verbrennungsmotors 1 und des Elektromotors 3 übereinstimmen. Somit erlaubt die Erfindung auch einen Hybrid- bzw. Zuschaltmodus, bei dem das Einschalten und Zukoppeln des Verbrennungsmotors 1 praktisch unbemerkt bleibt.

Obwohl die vorliegende Erfindung anhand einzelner Ausführungsbeispiele näher erläutert wurde, ist sie nicht darauf beschränkt, sondern vielfältig modifizierbar. Die beispielhaft genannten Getriebeformen und Drehmomentwandlerformen lassen sich beliebig abwandeln. Ferner sind neben dem beispielhaft genannten Messgrößen, die die Motorsteuerung erhält, weitere Parameter, die insgesamt die Fahrdynamik oder Fahrtsituation charakterisieren, verwendbar. Auch die vereinfachte Darstellung des Drehmomentwandlers lässt sich abwandeln.

## Patentansprüche

1. Verfahren zum Zuschalten eines Verbrennungsmotors (1) bei einem durch einen Elektromotor (3) angetriebenen Hybrid-Fahrzeugantrieb, wobei eine Drehzahl (VM) des Verbrennungsmotors (1) derart auf eine Zieldrehzahl geregelt wird, dass die Drehzahl (VM) des Verbrennungsmotors (1) die Zieldrehzahl über einen vorgebbaren Zeitraum (Δt) um eine vorgebbare Drehzahldifferenz (ΔUPM) zum Erzeugen eines Drehzahlüberschwingers überschreitet, wobei in Abhängigkeit von dem Drehzahlüberschwinger eine vorgegebene akustische Charakteristik erzielt wird und die Zieldrehzahl der aktuellen Drehzahl (EM) des Elektromotors (3) bei Zuschalten des Verbrennungsmotors (1) entspricht,
**dadurch gekennzeichnet, dass** das Überschreiten der Zieldrehzahl in Abhängigkeit von einem Wahlschalter (10) derart erfolgt, dass die sich ergebende Klangcharakteristik an einen sportlichen Motorstart erinnert.

2. Verfahren nach Anspruch 1, wobei die folgenden Verfahrensschritte durchgeführt werden:
a) Überwachen von mindestens einem Zuschaltkriterium für das Zuschalten des Verbrennungsmotors (1);
b) Kuppeln des Verbrennungsmotors (1) mit dem Elektromotor (3);
c) Zünden des Verbrennungsmotors (1); und
d) Regeln der Drehzahl (VM) des Verbrennungsmotors (1) derart, dass die Drehzahl (VM) über einen vorgegebenen Zeitraum (Δt) und um eine vorgegebene Drehzahldifferenz (ΔUPM) die Zieldrehzahl zum Erzeugen des Drehzahlüberschwingers überschreitet.

3. Verfahren nach Anspruch 1 oder 2, wobei nach Erreichen einer maximalen Drehzahl, welche der Summe aus der Zieldrehzahl mit der Drehzahldifferenz (ΔUPM) entspricht, die Drehzahl des Verbrennungsmotors (1) auf die Zieldrehzahl (EM) des Elektromotors (3) abgeregelt wird.

4. Verfahren nach Anspruch 2 oder 3, wobei der Verbrennungsmotor (1) und der Elektromotor (3) in einer Zuschaltphase mittels einer Kupplungseinrichtung (2) miteinander gekoppelt werden, wobei eine Kupplungsstärke (KEV) zum Erzeugen des Drehzahlüberschwingers vor Erreichen der Zieldrehzahl vorübergehend erniedrigt wird.

5. Verfahren nach einem der Ansprüche 1 bis 4, wobei die Drehzahldifferenz (ΔUFM) zwischen 200 - 500 Umdrehungen pro Minute liegt.

6. Verfahren nach einem der Ansprüche 1 bis 5, wobei der Zeitraum zwischen 0,5 und 1 Sekunde liegt.

7. Verfahren nach einem der Ansprüche 1 bis 6, wobei während des Zuschaltens ein Gangwechsel eines Getriebes (5) des Hybrid-Fahrzeugs unterdrückt wird.

8. Vorrichtung zur Zuschaltung eines Verbrennungsmotors (1) bei einem durch einen Elektromotor (3) angetriebenen Hybrid-Fahrzeugantrieb mit:
a) einem Drehmomentwandler (4) zur Kopplung des Hybrid-Fahrzeugantriebs mit einem Getriebe (5) eines Hybrid-Fahrzeugs;
b) einer Kupplungseinrichtung (2) zur Kopplung des Elektromotors (3) mit dem Verbrennungsmotor (1);
c) einer Motorsteuerungseinrichtung (8), welche ein Verfahren nach einem der Ansprüche 1 bis 7 durchführt; und
d) einem Wahlschalter (10) zum Unterdrücken des Drehzahlüberschwingers.

## Claims

1. Method for switching on an internal combustion engine (1) in a hybrid vehicle drive which is being driven by an electric motor (3), a rotational speed (VM) of the internal combustion engine (1) being regulated to a setpoint rotational speed in such a way that the rotational speed (VM) of the internal combustion engine (1) exceeds the setpoint rotational speed over a predefinable time period (Δt) by a predefinable rotational-speed difference (ΔUPM) in order to generate a rotational-speed overshoot, a predefined acoustic characteristic being achieved as a function of the rotational-speed overshoot, and the setpoint rotational speed corresponding to the actual rotational speed (EM) of the electric motor (3) when the internal combustion engine (1) is switched on, **characterized in that** the exceeding of the setpoint rotational speed takes place as a function of a selector switch (10) in such a way that the resulting sound characteristic is reminiscent of a sporty engine start.

2. Method according to Claim 1, the following method steps being carried out:
a) monitoring of at least one switch-on criterion for switching on of the internal combustion engine (1);
b) coupling of the internal combustion engine (1) to the electric motor (3);
c) ignition of the internal combustion engine (1); and
d) regulating of the rotational speed (VM) of the internal combustion engine (1) in such a way that the rotational speed (VM) exceeds the setpoint rotational speed over a predefined time period (Δt) and by a predefined rotational-speed difference (ΔUPM) in order to generate the rotational-speed overshoot.

3. Method according to Claim 1 or 2, the rotational speed of the internal combustion engine (1) being throttled to the setpoint rotational speed (EM) of the electric motor (3) after a maximum rotational speed is reached which corresponds to the sum of the setpoint rotational speed and the rotational-speed difference (ΔUPM).

4. Method according to Claim 2 or 3, the internal combustion engine (1) and the electric motor (3) being coupled to one another by means of a clutch device (2) in a switching-on phase, a coupling strength (KEV) being lowered temporarily in order to generate the rotational-speed overshoot before the setpoint rotational speed is reached.

5. Method according to one of Claims 1 to 4, the rotational-speed difference (ΔUPM) lying between 200 and 500 revolutions per minute.

6. Method according to one of Claims 1 to 5, the time period lying between 0.5 and 1 second.

7. Method according to one of Claims 1 to 6, a gear change of a gearbox (5) of the hybrid vehicle being suppressed during the swtching-on operation.

8. Apparatus for switching on an internal combustion engine (1) in a hybrid vehicle drive which is driven by an electric motor (3), having:
a) a torque converter (4) for coupling the hybrid vehicle drive to a gearbox (5) of a hybrid vehicle;
b) a clutch device (2) for coupling the electric motor (3) to the internal combustion engine (1);
c) an engine control device (8) which carries out a method according to one of Claims 1 to 7; and
d) a selector switch (10) for suppressing the rotational-speed overshoot.

## Revendications

1. Procédé de mise en marche d'un moteur à combustion interne (1) dans un groupe motopropulseur de véhicule hybride entraîné par un moteur électrique (3), dans lequel une vitesse de rotation (VM) du moteur à combustion interne (1) est réglée à une vitesse de rotation cible de telle manière que la vitesse de rotation (VM) du moteur à combustion interne (1) dépasse la vitesse de rotation cible pendant un intervalle de temps (Δt) pouvant être prédéterminé d'une différence de vitesse de rotation (ΔUPM) pouvant être prédéterminée afin de générer un dépassement de vitesse de rotation, une caractéristique acoustique prédéterminée étant obtenue en fonction du dépassement de vitesse de rotation et la vitesse de rotation correspondant à la vitesse de rotation instantanée (EM) du moteur électrique (3) lors de la mise en marche du moteur à combustion interne (1),
**caractérisé en ce que** le dépassement de la vitesse de rotation cible s'effectue en réponse à un commutateur de sélection (10) de telle manière que la caractéristique acoustique qui en résulte rappelle un moteur de type sportif.

2. Procédé selon la revendication 1, dans lequel les étapes de procédé suivantes sont effectuées :
a) surveillance d'au moins un critère de mise en marche pour la mise en marche du moteur à combustion interne (1) ;
b) couplage du moteur à combustion interne (1) au moteur électrique (3) ;
c) allumage du moteur à combustion interne (1) ; et
d) réglage de la vitesse de rotation (VM) du moteur à combustion interne (1) de telle manière que la vitesse de rotation (VM) dépasse la vitesse de rotation cible pendant un intervalle de temps (Δt) prédéterminé et d'une différence de vitesse de rotation (ΔUPM) prédéterminée pour générer le dépassement de vitesse de rotation.

3. Procédé selon la revendication 1 ou 2, dans lequel, après obtention d'une vitesse de rotation maximale correspondant à la somme de la vitesse de rotation cible et de la différence de vitesse de rotation (ΔUPM), la vitesse de rotation du moteur à combustion interne (1) est réglée à la vitesse de rotation cible (EM) du moteur électrique (3).

4. Procédé selon la revendication 2 ou 3, dans lequel le moteur à combustion interne (1) et le moteur électrique (3) sont couplés l'un à l'autre lors d'une phase de mise en marche au moyen d'un dispositif de couplage (2), une intensité de couplage (KEV) étant momentanément réduite avant d'atteindre la vitesse de rotation cible pour générer le dépassement de vitesse de rotation.

5. Procédé selon l'une quelconque des revendications 1 à 4, dans lequel la différence de vitesse de rotation (ΔUPM) se situe entre 200 et 500 tours par minute.

6. Procédé selon l'une quelconque des revendications 1 à 5, dans lequel l'intervalle de temps se situe entre 0,5 et 1 seconde.

7. Procédé selon l'une quelconque des revendications 1 à 6, dans lequel un changement de rapport d'une transmission (5) du véhicule hybride est supprimé pendant la mise en marche.

8. Dispositif destiné a la mise en marche d'un moteur à combustion interne (1) dans un groupe motopropulseur de véhicule hybride entraîné par un moteur électrique (3) comprenant :
a) un convertisseur de couple (4) destiné à coupler le groupe motopropulseur de véhicule hybride à une transmission (5) d'un véhicule hybride ;
b) un dispositif de couplage (2) destiné à coupler le moteur électrique (3) au moteur à combustion interne (1) ;
c) un dispositif de commande de moteur (8) qui met en oeuvre un procédé selon l'une quelconque des revendications 1 à 7 ; et
d) un commutateur de sélection (10) destiné à supprimer le dépassement de vitesse de rotation.
